# EUROPÄISCHE PATENTANMELDUNG

(11) **EP 3 689 666 A1**
(43) Veröffentlichungstag der Anmeldung: **05.08.2020**
(21) Anmeldenummer: 20152873.4
(22) Anmeldetag: 21.01.2020
(51) Int. Cl.: B60L 53/63, B60L 53/64, B60L 53/66

(54) **LADEMANAGEMENT IM NIEDERSPANNUNGSNETZ**

(30) Priorität: 29.01.2019 DE 102019102169
(71) Anmelder: telent GmbH, 71522 Backnang (DE)
(72) Erfinder: Smago, Carsten, D-71634 Ludwigsburg (DE)
(74) Vertreter: advotec.

(57) **Zusammenfassung**

Die Erfindung betrifft ein Verfahren zur Steuerung von Ladepunkten für Elektrofahrzeuge in einem Niederspannungsnetz, wobei an das Niederspannungsnetz Endabnehmer und Ladepunkte angeschlossen sind, und wobei die Endabnehmer und Ladepunkte mit einem Hausübergabepunkt und/oder einer Messstelle verbunden sind, und wobei die Ladepunkte einem virtuellen Leistungsknoten zugeordnet werden.

## Beschreibung

Die Erfindung betrifft ein Verfahren zur Steuerung von Ladepunkten für Elektrofahrzeuge in einem Niederspannungsnetz nach dem Oberbegriff des unabhängigen Hauptanspruchs.

Es ist bekannt, dass sich durch die Zunahme von Elektrofahrzeugen auch die Anzahl an Ladepunkten und sich somit auch die Last im Nieder- und Mittelspannungsbereich der Stadt- und Ortsnetze erhöht. Insbesondere private Ladepunkte von Endabnehmern, oftmals auch als Anschlussnehmer oder Anschlussnutzer bezeichnet, welche über einen Hausanschluss oder Hausübergabepunkt an das Spannungsnetz angeschlossen sind, tragen mit ihrem Strom- bzw. Leistungsverbrauch wesentlich zur Lasterhöhung im Niederspannungsnetz bei. Für solch eine wesentliche Lasterhöhung, hervorgerufen insbesondere durch unkontrollierte Lastspitzen und durch das gleichzeitige Laden einer Vielzahl von Elektrofahrzeugen, sind die Niederspannungsnetze derzeit nicht ausgelegt.

Um den steigenden im Zuge der Zunahme der Elektromobilität an die Niederspannungsnetze gestellten Anforderungen gerecht zu werden, könnte ein Ausbau der Netzstruktur im Nieder- und Mittelspannungsbereich fokussiert werden. Diese Lösung ist jedoch sehr kosten- und zeitintensiv und kann daher mit der erwarteten Zunahme an Elektrofahrzeugen und Ladepunkten nicht Schritt halten.

Aus dem Stand der Technik sind daher gattungsgemäße Vorrichtungen und Verfahren zur Überwachung bzw. Steuerung von Ladepunkten bekannt. Eine bekannte Möglichkeit zur Steuerung der einem Elektrofahrzeug zuführbaren elektrischen Energie ist der Einsatz einer Steuervorrichtung, welche den Ladevorgang eines Elektrofahrzeugs so steuert, dass ein bestimmter Schwellenwert an zugeführter elektrischer Energie an dem mit dem Elektrofahrzeug verbundenen Ladepunkt nicht überschritten wird. Zudem ist aus dem Stand der Technik das Koordinieren von Ladevorgängen mehrerer Elektrofahrzeuge bekannt, indem die Einschaltzeitpunkte und Abschaltzeitpunkte der Ladevorgänge der einzelnen Elektrofahrzeuge so festgelegt werden, dass die kritische Leistungsgrenze eines Spannungsnetzes nicht überschritten wird.

Nachteilig an den bekannten Verfahren ist jedoch, dass die Ladepunkte gleichberechtigt mit allen anderen Endabnehmern in ein Versorgungsnetz eingebunden sind. Dies bedeutet mit anderen Worten, dass zum täglichen Leben notwendige Endabnehmer, wie Waschmaschine, Ofen, Herd und ähnliche, mit Ladepunkten konkurrieren, wenn die genannten Endabnehmer gleichzeitig mit den Ladepunkten Leistung aus dem Versorgungsnetz abrufen wollen. Zudem sind nebst gattungsgemäßen Verfahren Eingriffe in die Versorgungsnetzstruktur und komplexe Schnittstellen zur Anbindung an das Versorgungsnetz notwendig, wodurch der Aufwand zur Umsetzung dieser gattungsgemäßen Verfahren zur Steuerung von Ladepunkten für Elektrofahrzeuge sehr hoch ist.

Es besteht daher ein großer Bedarf an einem Verfahren zur Steuerung von Ladepunkten für Elektrofahrzeuge in einem Niederspannungsnetz, das zuverlässig, hinreichend genau sowie aufwandsarm umsetzbar ist und eine an der Lastkapazität des Niederspannungsnetzes ausgerichtete Lastverteilung über Zeit und Ort gewährleistet. Zudem sollte die Energieversorgung zur Erfüllung des täglichen Lebensbedarfs durch das Verfahren gesichert werden und gleichzeitig den Elektrofahrzeugnutzern ausreichende Ladekapazitäten zur Verfügung gestellt werden.

Diese Aufgabe wird auf überraschend einfache aber wirkungsvolle Weise durch ein Verfahren zur Steuerung von Ladepunkten für Elektrofahrzeuge in einem Niederspannungsnetz nach der Lehre des unabhängigen Hauptanspruchs gelöst.

Erfindungsgemäß ist ein Verfahren zur Steuerung von Ladepunkten für Elektrofahrzeuge in einem Niederspannungsnetz, wobei die Ladepunkte einem virtuellen Leistungsknoten zugeordnet werden, vorgeschlagen, welches die folgenden Schritte umfasst:
a) Verbinden eines Ladepunkts mit einem Elektrofahrzeug; und
b) Zuordnen des Ladepunkts zu einem virtuellen Leistungsknoten; und
c) Ermitteln eines Leistungsbedarfs P_{LP} des Ladepunkts und einer Ladeperiode T_{LP} zum Laden der Batterie des mit dem Ladepunkt verbundenen Elektrofahrzeugs; und
d) Übermitteln einer Ladeanfrage für einen Ladevorgang zum Anfragezeitpunkt t_{A} durch den mit dem Elektromobil verbundenen Ladepunkt an eine Zentrallogik; und
e) Ermitteln einer Niederspannungsnetzauslastungserwartung durch die Zentrallogik für die Ladeperiode T_{LP}, wobei die Ladeperiode T_{LP} zu einem Startzeitpunkt des Ladevorgangs t_{LP} beginnt, welcher dem Anfragezeitpunkt t_{A} zeitlich nachfolgend ist; und
f) Ermitteln einer Niederspannungsnetzreserve am virtuellen Leistungsknoten in Abhängigkeit von der Niederspannungsnetzauslastungserwartung und der maximalen Netzauslastung während der Ladeperiode T_{LP}; und
g) Vergleich der Niederspannungsnetzreserve am virtuellen Leistungsknoten mit dem Leistungsbedarf P_{LP} während der Ladeperiode T_{LP} durch die Zentrallogik; und
h) Erstellen einer Ladeanweisung durch die Zentrallogik; und
i) Übermitteln einer Ladeanweisung an den Ladepunkt und Reservierung des Leistungsbedarfs P_{LP} während der Ladeperiode T_{LP} am virtuellen Leistungsknoten gemäß Ladeanweisung durch die Zentrallogik; und
j) Aktivierung des Ladevorgangs gemäß Ladeanweisung durch den Ladepunkt zum Startzeitpunkt t_{LP}.

Das erfindungsgemäße Verfahren beruht dabei auf dem Grundgedanken, dass die Energieversorgung zur Erfüllung des täglichen Lebensbedarfs von dem Bedürfnis des Elektrofahrzeugnutzers, ein Elektrofahrzeug stets mit vollem Leistungsabgriff zu laden, zu entkoppeln. Dabei wurde es als erfindungswesentlich erkannt, dass mehrere Ladepunkte einem virtuellen Leistungsknoten zugeordnet werden, wobei Endabnehmer und Ladepunkte, wie bekannt, mit einer Messstelle und einem Hausübergabepunkt verbunden sind. Somit kann die Leistungsaggregation der einem virtuellen Leistungsknoten zugeordneten Ladepunkte am virtuellen Leistungsknoten virtualisiert und unabhängig von anderen Endabnehmern erfolgen. Als erfindungswesentlich wurde es zudem erkannt, dass eine Niederspannungsnetzreserve am virtuellen Leistungsknoten in Abhängigkeit von der Niederspannungsnetzauslastungserwartung und der maximalen Netzauslastung während einer Ladeperiode ermittelt und diese durch die Zentrallogik mit dem Leistungsbedarf eines Ladepunkts während einer Ladeperiode verglichen wird. Erfindungsgemäß kann anhand des Vergleichs der Niederspannungsnetzreserve am virtuellen Leistungsknoten mit dem Leistungsbedarf eine Ladeanweisung für den Ladepunkt, der eine Ladeanfrage gestellt hat, erstellt und an diesen Ladepunkt übermittelt werden. Je nach Inhalt der durch die Zentrallogik erstellten Ladeanweisung erfolgt die Aktivierung eines Ladevorgangs durch den Ladepunkt. Erfindungsgemäß erfolgt mit Übermittlung der Ladeanweisung durch die Zentrallogik eine Reservierung des Leistungsbedarfs während der Ladeperiode am virtuellen Leistungsknoten gemäß der Ladeanweisung, so dass die durch die Ladeanweisung dem Ladepunkt zugesagte Leistung während der Ladeperiode nicht durch weitere Ladepunkte abgegriffen werden kann und zudem in die Ermittlung der Niederspannungsnetzreserve einfließt.

Im Rahmen der Erfindung bezeichnet der Begriff "Elektrofahrzeug" jegliche Verkehrsmittel, die mit elektrischer Energie angetrieben werden und deren Antriebsenergie in Batterien im Fahrzeug gespeichert wird. Dies umfasst beispielsweise, jedoch keineswegs ausschließlich, mit Elektromotor und Batterie ausgestattete Kleinkrafträder, Krafträder, Leichtkraftfahrzeuge, Busse, Elektrofahrräder und Kraftfahrzeuge. Bevorzugt werden mit dem erfindungsgemäßen Verfahren Ladepunkte für rein batteriebetriebene Kraftfahrzeuge und Hybridpersonenkraftwagen gesteuert.

Der Begriff "Ladepunkt" bezeichnet im Rahmen der Erfindung eine speziell für Elektrofahrzeuge konzipierte Schnittstelle, mit der genau ein Elektrofahrzeug zur selben Zeit aufgeladen werden kann. Oftmals wird der Begriff Ladepunkt gleichbedeutend mit Begriffen wie Ladestation, Stromtankstelle, Ladesäule oder Wall-Box verwendet. Weiterhin betrifft der Begriff Ladepunkt im Rahmen der Erfindung lediglich private Ladepunkte, welche an das Niederspannungsnetz angeschlossen sind und mit einem Hausübergabepunkt und/oder einer Messstelle verbunden sind. Diese privaten Ladepunkte sind von Schnellladepunkten, wie sie beispielsweise an Autobahnen oder öffentlichen Parkplätzen zu finden sind, insbesondere anhand der Ladeleistung zu unterscheiden.

Im Rahmen der Erfindung bezeichnet der Begriff "Niederspannungsnetz" den Teil des Stromnetzes, der an Endabnehmer, in der Regel Niederspannungsgeräte, elektrische Energie verteilt. Dabei ist dem Fachmann bekannt, dass Niederspannungsnetze, um Leistungsverluste zu vermeiden, in ihrer räumlichen Ausdehnung auf einen Bereich von einigen 100 Metern bis zu einigen wenigen Kilometern beschränkt sind und aus einem übergeordneten Mittelspannungsnetz gespeist werden. Daher werden Niederspannungsnetze oftmals auch als Ortsnetze bezeichnet.

Der Begriff "Hausübergabepunkt" betrifft im Rahmen der Erfindung die Verbindungsstelle zwischen Ortsnetz bzw. Niederspannungsnetz und dem angebundenen Hausnetz bzw. den Leitungen der Endabnehmer, weshalb der Hausübergabepunkt auch als Hausanschluss bezeichnet werden kann.

Der Begriff "Messstelle" betrifft im Rahmen der Erfindung ein Messgerät zur Erfassung der Menge der gelieferten elektrischen Energie, um eine Abrechnung des tatsächlichen Verbrauchs elektrischer Energie durch den Netzbetreiber zu ermöglichen. Eine Messstelle kann beispielsweise einen Stromzähler oder Elektrizitätszähler umfassen, mit welchem die elektrische Wirkleistung über die Zeit summiert wird. Jeder Endabnehmer ist mit einer Messstelle verbunden, wobei mehrere Messstellen mit einem Hausübergabepunkt verbunden sein können. Das heißt mit anderen Worten, dass, wenn am Hausanschluss lediglich ein einfaches Einfamilienhaus angeschlossen ist, der Hausanschluss mit einer Messstelle verbunden ist, über welche der gesamte Energieverbrauch der Endabnehmer und eines am Haus installierten Ladepunkts gemessen wird. Ist jedoch am Hausanschluss beispielsweise eine Hausgemeinschaftsanlage mit mehreren Wohnungen angeschlossen, so besitzt jede Wohnung eine eigene Messstelle, an welche wiederum Endabnehmer und Ladepunkte angeschlossen sein können. Ebenso kann es sein, dass eine Messstelle lediglich mit Endabnehmern oder lediglich mit Ladepunkten verbunden ist. Dem gegenüber sind den virtuellen Leistungsknoten lediglich Ladepunkte zugeordnet. Dadurch ergibt sich aufgrund der Mehrzahl von Ladepunkten, die jeweils einem virtuellen Leistungsknoten zugeordnet sind, und wiederum der Mehrzahl von virtuellen Leistungsknoten eine virtuelle Ladepunktebene, welche mittels einer Zentrallogik überwacht und gesteuert wird. Es hat sich als erfindungswesentlich herausgestellt, dass durch die Bildung virtueller Leistungsknoten, an welche die Ladepunkte angeschlossen sind, die Leistungsaggregation der Ladepunkte an den virtuellen Leistungsknoten erfolgen kann und zwar unabhängig von der Leistungsaggregation an den Hausübergabepunkten. Dadurch kann auch ermittelt werden, welche zusätzliche Leistung dem Niederspannungsnetz, allein aufgrund der den virtuellen Leistungsknoten zugeordneten Ladepunkte, entzogen werden könnte. Aufgrund dieser Leistungsaggregation der von Ladepunkten abrufbarer Leistung auf einer virtuellen Ebene sind keine weiteren komplexen Schnittstellen und/oder Anschlüsse notwendig und dem Netzbetreiber des Niederspannungsnetzes könnte ein direkter Zugriff eingeräumt werden, während der Netzbetreiber bei gattungsgemäßen Verfahren und Vorrichtungen zur Steuerung von Ladepunkten für Elektrofahrzeuge nur Zugriff auf die Messstellen und Hausübergabepunkte hat.

Erfindungswesentlich ist es, dass nach dem Verbinden eines Ladepunkts mit einem Elektrofahrzeug und der Zuordnung des Ladepunkts zu einem virtuellen Leistungsknoten der Leistungsbedarf P_{LP} des Ladepunkts und die Ladeperiode T_{LP} zum Laden der Batterie des mit dem Ladepunkt verbundenen Elektrofahrzeugs ermittelt wird. Der elektrische Leistungsbedarf, welcher im Rahmen der Erfindung die während eines Ladevorgangs abgerufene Menge an elektrischer Energie betrifft, und die Ladeperiode, welche im Rahmen der Erfindung die zeitliche Dauer eines Ladevorgangs betrifft, kann entweder durch das Elektrofahrzeug selbst, beispielsweise durch dessen Batteriemanagementsystem, ermittelt und an den Ladepunkt übermittelt werden oder nach Verbindung des Ladepunkts mit dem Elektrofahrzeug durch den Ladepunkt ermittelt werden.

Im Rahmen der Erfindung betrifft der Begriff "Ladeanfrage" im Wesentlichen Informationen und/oder Daten bezüglich eines Ladevorgangs, welche digital an eine Zentrallogik übermittelt werden. Die Ladeanfrage umfasst zumindest Informationen zu der durch den Ladepunkt angeforderten Ladeleistung, der Ladeperiode und zum Startzeitpunkt des Ladevorgangs.

Die Zentrallogik kann im Rahmen der Erfindung ein zentraler, übergeordneter Computer oder Server sein, welcher einerseits Zugriff auf Daten bezüglich der Netzauslastung, Netzleistung und/oder des Netzzustands hat und andererseits eine Modellierung des zu steuernden Niederspannungsnetzes anhand der virtuellen Leistungsknoten und der Messstellen und Hausübergabepunkte vornimmt. Zusätzlich kann die Zentrallogik eine Verbindung zu einer über das Internet verfügbaren ID-Infrastruktur, welche dem Fachmann auch als Cloud bekannt ist, aufweisen, um einen Fernzugriff zur Bedienung und/oder Wartung der Zentrallogik zu ermöglichen. In der Zentrallogik werden alle Daten der virtuellen Ladepunktebene und somit aller virtuellen Leistungsknoten und den zugeordneten Ladepunkten gesammelt, verarbeitet und/oder gespeichert.

Es hat sich als erfindungswesentlich herausgestellt, dass die Zentrallogik eine Niederspannungsnetzauslastungserwartung für die Dauer der angefragten Ladeperiode T_{LP}, welche zu einem Startzeitpunkt des Ladevorgangs t_{LP} beginnt und somit in der Zukunft liegt, ermittelt, so dass anhand dieser Niederspannungsnetzauslastungserwartung und der bekannten maximalen Netzauslastung des Niederspannungsnetzes die Niederspannungsnetzreserve am virtuellen Leistungsknoten ermittelt werden kann. Im Rahmen der Erfindung ist die Niederspannungsnetzreserve die Differenz aus maximaler Netzauslastung und der Netzauslastung bzw. der prognostizierten Niederspannungsnetzauslastungserwartung zu einem bestimmten Zeitpunkt oder in einem bestimmten Zeitraum. In diesem Zusammenhang wird die maximale Netzauslastung vom Netzbetreiber beispielsweise anhand der Kenntnisse der Netzstruktur und der Leistungsfähigkeit der Trassen und Untertrassen und unter Berücksichtigung einer stabilen und sicheren Versorgung der Endabnehmer berechnet und der Zentrallogik übermittelt.

Bei der Niederspannungsnetzauslastungserwartung handelt es sich im Rahmen der Erfindung um einen prognostizierten Wert, der von der Zentrallogik anhand der ihr zur Verfügung stehenden Daten berechnet werden kann. Es ist einem Fachmann verständlich, dass eine Prognose in der Regel nicht zu 100 Prozent korrekt sein kann. Der Begriff betrifft daher eine statistisch signifikante Wahrscheinlichkeit, was die Genauigkeit der Ermittlung der Niederspannungsnetzauslastungserwartung betrifft. Ob eine derartige Prognose statistisch signifikant ist, kann ohne erfinderisch tätig zu werden von einem Fachmann mittels in der Fachwelt bekannter Verfahren bestimmt werden. Beispielsweise sind statistische Evaluierungstools zu nennen, wie beispielsweise die Bestimmung des Konfidenzintervalls, des p-Wertes, des Student's-t-Tests, der Mann-Whitney-Bestimmung usw.. Die entsprechenden Intervalle sind mindestens 90 %, mindestens 95 %, mindestens 97 %, mindestens 98 % oder mindestens 99 % korrekt. Die p-Werte sind bevorzugt 0,1, 0,05, 0,01, 0,005 oder 0,0001. Bevorzugt ist die Bestimmung der Niederspannungsnetzauslastungserwartung im Rahmen der vorliegenden Erfindung mindestens 60 %, mindestens 70 %, mindestens 80 %, mindestens 90 % oder mindestens 95 % oder mindestens 99 % korrekt.

Vorteilhafterweise sind in der Niederspannungsnetzauslastungserwartung bereits alle Leistungsabrufe der Endabnehmer zur Erfüllung des täglichen Lebensbedarfs berücksichtigt, so dass die Niederspannungsnetzreserve an den virtuellen Leistungspunkten den Ladepunkten, unabhängig von der Energieversorgung der Endabnehmer, zur Verfügung steht. Daher kann in einfacher Art und Weise nach Vergleich der Niederspannungsnetzreserve mit dem angefragten Leistungsbedarf während der Ladeperiode durch die Zentrallogik eine Ladeanweisung erstellt und an den anfragenden Ladepunkt übermittelt werden.

Für einen Vergleich der Niederspannungsnetzreserve mit dem angefragten Leistungsbedarf während der Ladeperiode in Schritt g) des erfindungsgemäßen Verfahrens sind alle einem Fachmann bekannten Mittel denkbar, wie beispielsweise ein Computer und/oder ein Computerprogramm. Ein Computerprogramm kann zusätzlich das Ergebnis des Vergleichs evaluieren, beispielsweise automatisch eine Beurteilung der innerhalb der Ladeperiode verfügbaren Leistung liefern. Im Rahmen der Erfindung ist es verständlich, dass das Erstellen der Ladeanweisung in Schritt h) des erfindungsgemäßen Verfahrens in direkter oder indirekter Abhängigkeit vom Vergleichsergebnis in Schritt g) des erfindungsgemäßen Verfahrens erfolgt. In diesem Zusammenhang ist es denkbar, dass das Ergebnis des Vergleichs als absoluter Wert und/oder relativer Wert ausgebbar ist.

Im Rahmen der Erfindung betrifft der Begriff eine "Ladeanweisung" Informationen, welche bevorzugt digital übermittelt werden, bezüglich des durch die Zentrallogik festgelegten Startzeitpunkts des Ladevorgangs, der abzurufenden Menge elektrischer Energie und der Dauer des Ladevorgangs.

Mit anderen Worten übermittelt die Zentrallogik gemäß Schritt i) des erfindungsgemäßen Verfahrens als Antwort auf die Ladeanfrage des Ladepunkts eine Ladeanweisung an den Ladepunkt, in der dem Ladepunkt der Leistungsbedarf, die Ladeperiode und der Startzeitpunkt des Ladevorgangs vorgegeben werden. Zeitgleich erfolgt eine Reservierung des freigegebenen Leistungsbedarfs während der Ladeperiode am virtuellen Leistungsknoten durch die Zentrallogik. Vorteilhafterweise wird der Ladevorgang gemäß Ladeanweisung durch den Ladepunkt erst nach Reservierung des erforderlichen Leistungsbedarfs aktiviert, so dass eine Überlastung des Niederspannungsnetzes abhängig von der prognostizierten Netzauslastungserwartung ausgeschlossen werden kann. Es ist denkbar, dass ein unkritischer, ungeregelter Minimalwert sofort zugelassen werden kann.

Mittels des erfindungsgemäßen Verfahrens ist es somit möglich, eine Überlastung von Niederspannungsnetzen zuverlässig auszuschließen und dabei die Energieversorgung zur Erfüllung des täglichen Lebensbedarfs sicherzustellen und gleichzeitig das Laden von Elektrofahrzeugen an privaten Ladepunkten zu ermöglichen, wenngleich das Laden von Elektrofahrzeugen nachrangig behandelt wird. Durch die Zuordnung der privaten Ladepunkte zu virtuellen Leistungsknoten ist es möglich, erst nach der Ladeanfrage eines Ladepunkts diesen in Abhängigkeit von der aktuellen Niederspannungsnetzreserve eine bestimmte Menge elektrischer Energie zum Abruf freizugeben und diese Menge elektrischer Energie flexibel an die zu erwartende Niederspannungsnetzauslastung anzupassen. Zudem ist es durch das Vorsehen virtueller Leistungsknoten möglich, die Netzreserven dynamisch örtlich und zeitlich zu verteilen und nicht fest verbuchen zu müssen.

Insbesondere für Netzbetreiber ist das erfindungsgemäße Verfahren überaus vorteilhaft, da diese einen direkten Zugriff über die Zentrallogik auf den Regel- und Steuerkreis in ihrem Niederspannungsnetzgebiet erhalten, ohne dass komplexe Schnittstellen und mögliche weitere Dienstleistungsebenen aufgrund von externer Hardware und/oder Software notwendig sind. Zudem ist es möglich, die zur Umsetzung des erfindungsgemäßen Verfahrens notwendige Hardware und/oder Software aufgrund deren geringen Komplexität an allen gängigen privaten Ladepunkten nachzurüsten. Das im Rahmen des erfindungsgemäßen Verfahrens vorgesehene Virtualisieren von Leistungsknoten und Modellieren des Niederspannungsnetzes führt vorteilhafterweise dazu, dass die Ladevorgänge an den privaten Ladepunkten für Elektrofahrzeuge an den verfügbaren Netzreserven ausgerichtet werden können und die alltägliche Stromversorgung weiterhin gewährleistet bleibt. Auch wird es durch das erfindungsgemäße Verfahren ermöglicht, den zukünftigen Ausbau der physikalischen Übertragungsnetze, insbesondere im Mittel- und Niederspannungsbereich, an der Zunahme der Leistungsabfragen im Zuge der zunehmenden Elektromobilität zu orientieren, wodurch kostenintensive Vorabinvestitionen vermieden werden können.

Vorteilhafte Weiterbildungen der Erfindung, welche einzeln oder in Kombination realisierbar sind, sind in den Unteransprüchen dargestellt.

In einer Weiterbildung des Verfahrens ist es denkbar, dass die Ladeanweisung eine Freigabe der Ladeanfrage oder eine Zurückweisung der Ladeanfrage oder eine Modifikation der Ladeanfrage umfassen kann. Mittels dieser Ausgestaltung ist es möglich, dass je nach Niederspannungsnetzreserve am virtuellen Leistungsknoten in unterschiedlicher Art und Weise auf die Ladeanfrage des Ladepunkts reagiert werden kann. So ist es möglich, dass der Ladeanfrage des Ladepunkts komplett entsprochen werden kann, falls der Vergleich der Niederspannungsnetzreserve mit dem Leistungsbedarf im Schritt g) des erfindungsgemäßen Verfahrens ergibt, dass zum angefragten Startzeitpunkts des Ladevorgangs t_{LP} der angefragte Leistungsbedarf P_{LP} während der angefragten Ladeperiode T_{LP} verfügbar ist, ohne dass die maximale Netzauslastung erreicht wird. Andererseits kann die Ladeanweisung auch eine komplette Zurückweisung der Ladeanfrage umfassen, beispielsweise wenn ein Ladevorgang gemäß Ladeanfrage des Ladepunkts aufgrund der zu erwartenden Netzauslastung nicht umsetzbar ist. Alternativ kann die Zentrallogik auch eine Ladeanweisung erstellen, welche eine Modifikation der Ladeanfrage umfasst. Das bedeutet mit anderen Worten, dass die durch den Ladepunkt gestellte Ladeanfrage durch die Zentrallogik basierend auf dem Vergleichsergebnis aus Schritt g) des erfindungsgemäßen Verfahrens angepasst und als Ladeanweisung an den Ladepunkt übermittelt wird, so dass zwar ein Ladevorgang freigegeben wird, dieser jedoch andere Parameter aufweist als die ursprünglich vom Ladepunkt gestellte Ladeanfrage.

Als vorteilhaft hat es sich erwiesen, dass, bei Modifikation der Ladeanfrage durch die Zentrallogik, der durch den Ladepunkt angefragte Leistungsbedarf P_{LP} und/oder die zeitliche Dauer der Ladeperiode T_{LP} durch die Zentrallogik reduziert werden kann. Alternativ kann bei Modifikation der Ladeanfrage durch die Zentrallogik auch der Startzeitpunkt des Ladevorgangs t_{LP} durch die Zentrallogik auf einen anderen Zeitpunkt verschoben werden, so dass ein Ladevorgang in dem durch den Ladepunkt gemäß Ladeanfrage angefragten Leistungsbedarf und Ladeperiode durch die Zentrallogik freigegeben wird, dieser jedoch erst zu einem Zeitpunkt, an dem eine ausreichende Niederspannungsnetzreserve zur Verfügung steht, startet. Dies führt vorteilhafterweise dazu, dass die Netzauslastung auf einfache Art und Weise gesteuert werden kann und Lastspitzen vermieden werden.

Es ist weiterhin denkbar, dass die Ladeanweisung durch die Zentrallogik nicht nur in Abhängigkeit von der Niederspannungsnetzreserve am virtuellen Leistungsknoten erstellt wird, sondern zudem oder alternativ in Abhängigkeit von der Anzahl der vor dem Anfragezeitpunkt t_{A} übermittelten Ladeanfragen des mit dem Ladepunkt verbundenen Elektrofahrzeugs und/oder in Abhängigkeit vom Ladezustand der Batterie des verbundenen Elektrofahrzeugs und/oder in Abhängigkeit von den Energiekosten in der Ladeperiode T_{LP} und/oder bei einer Vielzahl einem virtuellen Leistungsknoten zugeordneter Ladepunkte in Abhängigkeit von den Ladeanfragen der weiteren Ladepunkte. In diesem Zusammenhang betrifft der Begriff "Ladezustand der Batterie" die aktuelle elektrische Ladung einer Batterie im Verhältnis zum Nominalwert ihrer Kapazität, wobei der Ladezustand in bekannter Weise als State-of-Charge-Wert in Prozent angegeben werden kann. Zudem betrifft der Begriff "Batterie" im Rahmen der Erfindung jegliche Speicher für elektrische Energie, die wieder aufgeladen werden können. Durch die Erstellung der Ladeanweisung in Abhängigkeit vom Ladezustand der Batterie des verbundenen Elektrofahrzeugs ist es vorteilhafterweise möglich, Ladeanfragen von Ladepunkten, an denen ein Elektrofahrzeug mit geringem Batterieladezustand angeschlossen ist, zu priorisieren und demgegenüber Ladeanfragen von Ladepunkten, an denen ein Elektrofahrzeug mit hohem Batterieladezustand angeschlossen ist, zurückzuweisen oder zu modifizieren. In ähnlicher Art und Weise kann eine Ladeanweisung auch modifiziert werden, wenn ein Ladepunkt bereits vor dem Anfragezeitpunkt t_{A} sehr viele Ladeanfragen übermittelt hat. So ist es beispielsweise möglich, dass ein Ladepunkt täglich mehrere Ladeanfragen stellt, welche jedoch nur einen geringen Leistungsbedarf und eine kurze Ladeperiode umfassen, und die Zentrallogik daher eine Ladeanweisung erstellt, mittels derer mehrere der kurzen Ladevorgänge zur Schonung der Batterie in einen zeitlich längeren Ladevorgang zusammengefasst werden. Zudem ist es möglich, dass eine Priorisierung der Energiekosten bei der Erstellung der Ladeanweisung durch die Zentrallogik erfolgt, so dass die angefragten Ladevorgänge beispielsweise auf einen Zeitpunkt verschoben werden, zu dem die Energie besonders kostengünstig abrufbar ist. Da einem virtuellen Leistungsknoten erfindungsgemäß mehrere Ladepunkte zugeordnet sein können, ist es besonders vorteilhaft, wenn die Ladeanweisung durch die Zentrallogik, in Abhängigkeit von den Ladeanfragen der weiteren dem virtuellen Leistungsknoten zugeordneten Ladepunkte, erstellt wird. Somit ist es vorteilhafterweise möglich die Ladeanfragen einer Vielzahl von Ladepunkten zu vergleichen und dadurch eine optimale Ausnutzung der Niederspannungsnetzreserve zu erreichen, indem beispielsweise die Ladeanweisungen derart erstellt werden, dass möglichst viele Ladevorgänge parallel ablaufen können, ohne dass die maximale Netzauslastung erreicht wird.

Weiterhin ist die Möglichkeit zur Unterbrechung der Energiezufuhr zu einem Ladepunkt, sobald die tatsächliche Niederspannungsnetzauslastung einen Grenzwert überschreitet, als erfindungswesentlich erkannt worden. Dadurch ist es vorteilhafterweise möglich, falls die tatsächliche Niederspannungsnetzauslastung von der prognostizierten Niederspannungsnetzauslastungserwartung abweicht und eine kritische Niederspannungsnetzauslastung erreicht wird, einen Ladevorgang an einem aktiven Ladepunkt im Sinne einer Überlastabwehr zu beenden und den Ladepunkt zurückzusetzen. In Abhängigkeit von der Abweichung der Niederspannungsnetzauslastungserwartung von der tatsächlichen Netzauslastung kann es notwendig sein, eine Vielzahl von Ladevorgängen an einer Vielzahl von Ladepunkten zu beenden, so dass sichergestellt ist, dass die kritische und/oder maximale Netzauslastung nicht überschritten und der Energiebezug der Endabnehmer nicht beeinträchtigt wird. Zudem ist es als erfindungswesentlich erkannt worden, dass ein Ladepunkt, zu welchem die Energiezufuhr unterbrochen wurde oder dessen Ladeanfrage durch die Zentrallogik zurückgewiesen wurde, zu einem späteren Zeitpunkt eine erneute Ladeanfrage an die Zentrallogik übermitteln kann. Bevorzugt wird eine solche Ladeanfrage durch die Zentrallogik priorisiert behandelt.

Gemäß einer Weiterbildung der Erfindung ist es denkbar, dass das Ermitteln des Leistungsbedarfs P_{LP} des Ladepunkts und/oder der Ladeperiode T_{LP} zum Laden der Batterie des mit dem Ladepunkt verbundenen Elektrofahrzeugs anhand der Vorgabe eines Leistungsbedarfs P_{LP} und/oder einer Ladeperiode T_{LP} durch einen Nutzer des Elektrofahrzeugs erfolgen kann. Dies bietet den Vorteil, dass der Nutzer des Elektrofahrzeugs von einer automatisierten Ermittlung des Leistungsbedarfs und/oder der Ladeperiode abweichen kann, so dass er beispielsweise die Ladeperiode auf eine gewisse Zeitdauer verkürzt.

Im Rahmen der Erfindung hat es sich als vorteilhaft erwiesen, dass der Leistungsbedarf P_{LP} des Ladepunkts zum Laden des mit dem Ladepunkt verbundenen Elektrofahrzeugs in Abhängigkeit von der Zeit ermittelt wird. In diesem Zusammenhang ist es einem Fachmann bekannt, dass der Ladevorgang unterschiedliche Ladephasen aufweisen kann, in welchen unterschiedliche Leistungsbedarfe anfallen. Dies wird auch als Ladeprofil bezeichnet. Daher kann auch der Leistungsbedarf des Ladepunkts über die Zeitdauer der Ladeperiode variieren, weshalb es vorteilhaft ist, den Leistungsbedarf während der Ladeperiode in Abhängigkeit von der Zeit zu ermitteln. Dies ermöglicht vorteilhafterweise eine bessere Ausnutzung der Niederspannungsnetzreserve im Unterschied zu einer einfachen Ermittlung eines konstanten Leistungsbedarfs über den Zeitraum der Ladeperiode.

Es ist weiterhin denkbar, dass die Ladeanfrage durch den Ladepunkt drahtlos und/oder kabelgebunden an die Zentrallogik übermittelt werden kann. Eine kabelgebundene Übermittlung lässt vorteilhafterweise die Übermittlung großer Datenmengen auf einfache und sichere Art und Weise zu. Bevorzugt erfolgt die Übermittlung der Ladeanfrage durch den Ladepunkt an die Zentrallogik drahtlos per Funktechnik. Dabei kann auf bekannte kabellose Datenübertragungsverfahren, wie beispielsweise, jedoch keineswegs ausschließlich, WLAN (englisch: wireless local area network), LTE (englisch: long term evolution), LoRa (englisch: long range network), LoRaWAN (englisch: long range wide area network) und/oder optischen Richtfunk zurückgegriffen werden. Besonders bevorzugt erfolgt die Übermittlung drahtlos mittels LoRaWAN, da dieses eine anforderungsgemäße Reichweite und eine hohe Gebäudedurchdringung bietet. Zudem ist bei Nutzung einer drahtlosen Übermittlung von Daten die Installation und/oder Nachrüstung einfach und kostengünstig möglich und, insbesondere bei Nutzung der Funktechnik LoRaWAN, das Netzwerk gegen eine Manipulation von Daten bzw. einen Zugriff von außerhalb des Netzwerks gesichert.

Ebenso hat es sich als vorteilhaft erwiesen, wenn das Verbinden des Ladepunkts mit dem Elektrofahrzeug drahtlos und/oder kabelgebunden erfolgen kann. Die Energiezufuhr erfolgt dabei bevorzugt kabelgebunden, wobei auch eine drahtlose Zufuhr von Energie an das Elektrofahrzeug denkbar ist. Jedoch erfolgt eine drahtlose Verbindung des Ladepunkts mit dem Elektrofahrzeug bevorzugt zur Übermittlung von Daten.

Gemäß einer weiteren Ausführungsform der Erfindung ist es vorgesehen, dass das Elektrofahrzeug eine Ladevoranfrage zu einem Zeitpunkt t_{AE} an den Ladepunkt übermittelt und diese Ladevoranfrage des Elektrofahrzeug im Ladepunkt verarbeitet wird. Der Zeitpunkt t_{AE} liegt zeitlich vor dem Anfragezeitpunkt t_{A}, zu dem die Ladeanfrage für einen Ladevorgang vom Ladepunkt an die Zentrallogik übermittelt wird. Dadurch ergibt sich vorteilhafterweise die Möglichkeit, dass Daten bereits im Vorfeld, beispielsweise drahtlos, im Sinne einer Ankündigung eines Ladevorgangs an einen Ladepunkt übermittelt werden können und der Ladepunkt bereits den zu erwartenden Leitungsbedarf, die zu erwartende Ladeperiode und/oder den zu erwartenden Startzeitpunkt des Ladevorgangs an die Zentrallogik übermitteln kann. Dies ermöglicht eine einfachere und zuverlässigere Planung und Abstimmung der einzelnen Ladepunkte in einem Niederspannungsnetz. Zudem ist es denkbar, dass der Nutzer des Elektrofahrzeugs eine Antwort auf die Ladevoranfrage erhält, in der ihm beispielsweise ein möglicher Startzeitpunkt des Ladevorgangs mitgeteilt wird.

Im Rahmen der Erfindung hat es sich als vorteilhaft erwiesen, wenn das Zuordnen eines Ladepunkts zu einem virtuellen Leistungsknoten anonymisiert erfolgt. Dies ist jedoch nur möglich, da die virtuelle Ladepunktebene mit den virtuellen Leistungsknoten vollständig virtualisiert und nicht mehr an Hausübergabepunkte oder Messstellen gekoppelt ist. Die anonymisierte Zuordnung der Ladepunkte zu Leistungsknoten ermöglicht eine Leistungsaggregation an den virtuellen Leistungsknoten unabhängig von den Datenschutz betreffender Vorschriften und sorgt gleichzeitig für eine erhöhte Akzeptanz bei den Benutzern der Ladepunkte.

Es ist weiterhin denkbar, dass die Niederspannungsnetzauslastungserwartung durch die Zentrallogik für eine Ladeperiode T_{LP} in Abhängigkeit von der momentanen Netzauslastung zum Zeitpunkt t_{A}, zu welchem die Ladeanfrage für einen Ladevorgang durch einen Ladepunkt an die Zentrallogik übermittelt wird, und/oder von den in der Zentrallogik hinterlegten Daten ermittelt wird. Da es sich bei der Niederspannungsnetzauslastungserwartung um einen prognostizierten Wert handelt, ist es besonders vorteilhaft, wenn die Zentrallogik auf historische Daten zugreifen kann. Dabei ist es beliebig, ob diese Daten in der Zentrallogik selbst gespeichert sind, oder die Zentrallogik auf einen externen Speicher zugreifen kann. Die Zentrallogik kann mit Hilfe von digitaler Rechenleistung und/oder informationstechnischer Programme in der gespeicherten Menge von Daten Regelmäßigkeiten, Wiederholungen, Ähnlichkeiten oder Gesetzmäßigkeiten erkennen. Dadurch kann die Genauigkeit und Zuverlässigkeit der Ermittlung der prognostizierten Niederspannungsnetzauslastungserwartung gesteigert werden.

Im Rahmen der Erfindung hat es sich als besonders vorteilhaft erwiesen, dass der tatsächliche Verbrauch an elektrischer Energie durch eine Messstelle erfasst wird und/oder eine Leistungsaggregation zur Leistungsplanung des Niederspannungsnetzes am Hausübergabepunkt erfolgt. Die Verbrauchsabrechnung durch den Netzbetreiber kann somit weiterhin in bekannter Weise erfolgen, indem jedem Endverbraucher eine Messstelle zugeordnet ist, an welche sowohl die Endabnehmer für den alltäglichen Lebensbedarf als auch die Ladepunkte angeschlossen sind. Im Rahmen der Erfindung betrifft der Begriff "Endverbraucher" den Kunden bzw. Vertragspartner des Netzbetreibers, wobei die elektrischen Geräte des Endverbrauchers als Endabnehmer mit dem Hausübergabepunkt und der Messstelle des Endverbrauchers verbunden sind. Die Leistungsaggregation kann, wie bereits bekannt, weiterhin über den Hausübergabepunkt erfolgen, auf welchen der Netzbetreiber direkten Zugriff hat. Diese Ausgestaltung hat den Vorteil, dass keine weiteren komplexen Schnittstellen vorgesehen werden müssen und sowohl Abrechnung als auch Leistungsaggregation weiterhin in gewohnter Weise ohne aufwendige Änderungen in Abläufen, Hardware oder Software durch den Netzbetreiber vorgenommen werden können.

Gemäß einer vorteilhaften Weiterbildung des erfindungsgemäßen Verfahrens wird der Leistungsbedarf zum optimalen Laden des Elektrofahrzeugs in der Ladeperiode anhand der maximalen Leistung des Ladepunkts, der maximalen Leistung des Ladeanschlusses, der maximalen Leistung des Elektrofahrzeugs, der Temperatur der Batterie, des Ladezustands der Batterie und/oder der Temperatur am Ort des Ladepunkts ermittelt. Mit anderen Worten wird das Ladeprofil anhand der vorgenannten Parameter ermittelt. Der Einbezug der vorgenannten Parameter ermöglicht vorteilhafterweise die Ermittlung des Leistungsbedarfs anhand infrastrukturseitiger Rahmenbedingungen und/oder äußerer Einflüsse, wodurch ein optimal abgestimmter Ladevorgang erstellt werden kann. Auf diese Art und Weise ist es möglich, die Batterie schonend zu laden und deren Lebensdauer zu verlängern. Im Rahmen der Erfindung ist die maximale Leistung des Ladepunkts die Leistung, welche der Ladepunkt maximal an das Elektrofahrzeug überführen kann. Die maximale Leistung des Ladeanschlusses ist die Leistung, die der Ladeanschluss maximal vom Ladepunkt an das Elektrofahrzeug übertragen kann. Der Begriff "Ladeanschluss" betrifft im Rahmen der Erfindung die Schnittstelle zwischen Ladepunkt und Elektrofahrzeug und besteht bevorzugt aus einer Leitung und einem Stecker, wobei der Stecker lösbar mit einer Buchse des Elektrofahrzeugs verbindbar ist. Weiterhin ist es denkbar, dass ein weiterer Stecker des Ladeanschlusses mit einer Buchse des Ladepunkts lösbar verbindbar ist oder die Leitung unlösbar mit dem Ladepunkt verbunden ist.

In einer vorteilhaften Weiterbildung der Erfindung ist es denkbar, dass ein Ladepunkt mit einer Ladeleistung von weniger als 12 Kilowatt, im Folgenden mit kW abgekürzt, oder 22 kW betrieben wird. Bevorzugt wird ein Ladepunkt, mit einer Ladeleistung von weniger als 12 kW, 11 kW, 10 kW, 9 kW, 8 kW, 7 kW, 6 kW, 5 kW, 4 kW, 3 kW, 2 kW oder 1 kW betrieben. Noch mehr bevorzugt wird ein Ladepunkt mit einer Ladeleistung von weniger als 11,9 kW, 11,8 kW, 11,7 kW, 11,6 kW, 11,5 kW, 11,4 kW, 11,3 kW, 11,2 kW, 11,1 kW, 11 kW, 10,9 kW, 10,8 kW, 10,7 kW, 10,6 kW, 10,5 kW, 10,4 kW, 10,3 kW, 10,2 kW 10,1 kW, 10 kW, 9,9 kW, 9,8 kW, 9,7 kW, 9,6 kW, 9,5 kW , 9,4 kW, 9,3 kW, 9,2 kW, 9,1 kW, 9 kW, 8,9 kW, 8,8 kW, 8,7 kW, 8,6 kW, 8,5 kW, 8,4 kW, 8,3 kW, 8,2 kW, 8,1 kW oder 8 kW betrieben. Am meisten bevorzugt wird ein Ladepunkt mit einer Ladeleistung von 11 kW betrieben. Das Betreiben eines Ladepunkts mit einer Ladeleistung, welche geringer ist als 12 kW, bietet den Vorteil, dass nur eine Anzeigepflicht gegenüber dem Netzbetreiber besteht, während für einen Ladepunkt mit einer Ladeleistung mit mehr als 12 kW eine Zulassungspflicht besteht. Daher ist der Aufwand zur Installation eines privaten Ladepunkts mit weniger als 12 kW Ladeleistung wesentlich geringer.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf das Ausführungsbeispiel beschränkt. Die Ausführungsbeispiele sind in den Figuren schematisch dargestellt. Gleiche Bezugszeichen in den einzelnen Figuren bezeichnen gleiche oder funktionsgleiche bzw. hinsichtlich ihrer Funktion einander entsprechende Elemente.

Es zeigt:
- **Fig. 1**: eine schematische Darstellung der virtuellen Ladepunktebene im Niederspannungsnetz; und
- **Fig. 2**: ein Flussdiagramm gemäß einer Ausführungsform des Verfahrens zur Steuerung von Ladepunkten für Elektrofahrzeuge in einem Niederspannungsnetz; und
- **Fig. 3**: eine schematische Darstellung des zeitlichen Ablaufs einer Ladeanfrage eines Ladepunkts in einem Niederspannungsnetz.

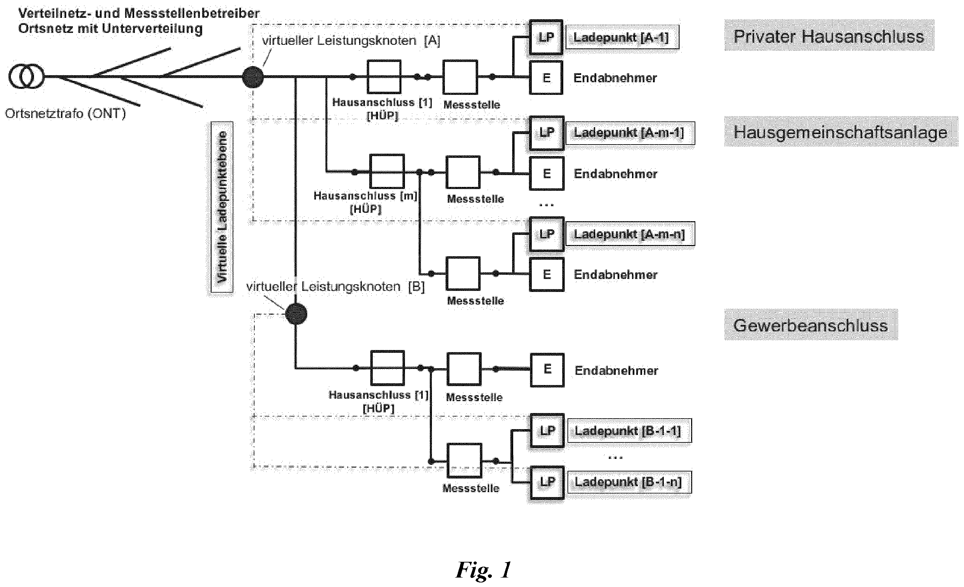

**Fig. 1** zeigt die Modellierung eines Niederspannungsnetzes, welches in der vorliegenden Ausführungsform durch ein Ortsnetz repräsentiert ist, in dem die Hausanschlüsse, auch als Hausübergabepunkte (HÜP) bezeichnet, an einen Ortsnetztrafo angeschlossen sind. Es ist zu erkennen, dass ein privater Hausanschluss genau einen Hausanschluss und genau eine Messstelle aufweist, wobei es sich beispielsweise um ein Einfamilienhaus handeln kann, welches in der dargestellten Ausführungsform einen privaten Ladepunkt und einen Endabnehmer aufweist. Unter dem Endabnehmer sind alle Endabnehmer elektrischer Energie zusammengefasst, welche für den täglichen Lebensbedarf erforderlich sind. So sind dies im Regelfall Beleuchtungstechnik, Unterhaltungselektronik, Küchengeräte und Waschgeräte. Der Stromverbrauch des privaten Hausanschlusses wird über die Messstelle ermittelt und entsprechend abgerechnet. Des Weiteren ist eine Hausgemeinschaftsanlage an das Niederspannungsnetz angeschlossen. Auch die Hausgemeinschaftsanlage ist über einen einzelnen Hausübergabepunkt (HÜP) mit dem Niederspannungsnetz verbunden. In Abweichung zu einem privaten Hausanschluss weist die Hausgemeinschaftsanlage jedoch mehrere Messstellen auf, welche jeweils einer Wohneinheit zugeordnet sind, so dass eine Abrechnung je Wohneinheit erfolgen kann. Jede Messstelle ist wiederum mit einem privaten Ladepunkt und einem Endabnehmer verbunden. Zudem ist an das dargestellte modellierte Niederspannungsnetz ein Gewerbeanschluss über einen weiteren Hausübergabepunkt angeschlossen, wobei der Gewerbeanschluss zwei Messstellen aufweist. An eine Messstelle sind die Endabnehmer angeschlossen und an die zweite Messstelle sind mehrere Ladepunkte angeschlossen. Gemäß der dargestellten Ausführungsform sind von der virtuellen Ladepunktebene zwei virtuelle Leistungsknoten A und B umfasst. Diesen Leistungsknoten sind jeweils mehrere Ladepunkte zugeordnet, so dass eine Trennung von Endabnehmern, welche die Energie zur Erfüllung des täglichen Lebensbedarfs des Endverbrauchers abrufen, und den Ladepunkten, welche die Energie zum Laden eines Elektrofahrzeugs abrufen, möglich ist. Die Modellierung des Niederspannungsnetzes einschließlich der virtuellen Leistungsknoten und der Zuordnung von Ladepunkten zu den virtuellen Leistungsknoten erfolgt über eine Zentrallogik.

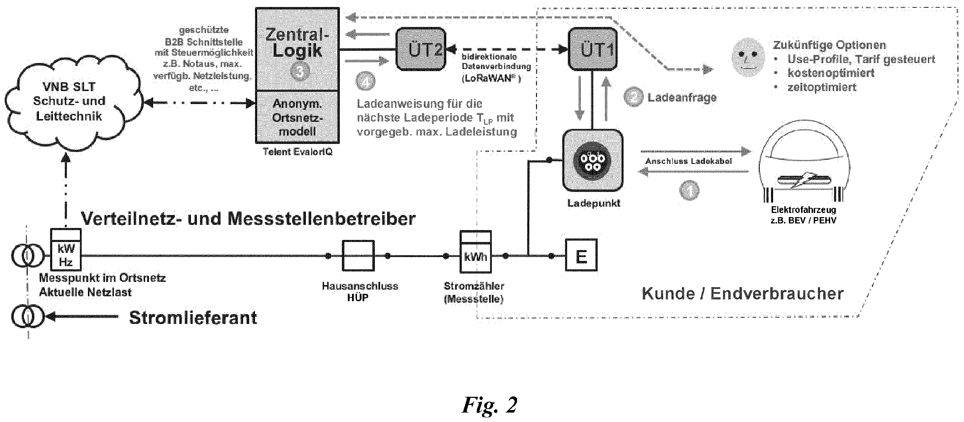

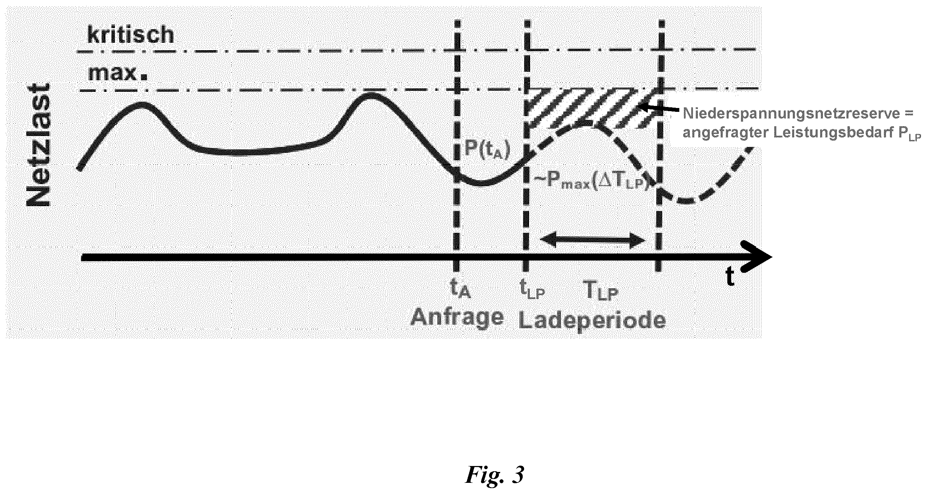

Den **Figuren 2** und **3** ist der schematische Ablauf des erfindungsgemäßen Verfahrens gemäß einer Ausführungsform zu entnehmen. Die Endabnehmer (E) des Kunden und der private Ladepunkt des Kunden des Netzbetreibers sind mit einem Hausanschluss an das Stromnetz angebunden, wobei der Stromverbrauch von einer Messstelle zur Verbrauchsabrechnung erfasst wird. Das Niederspannungsnetz, an das der Kunde bzw. Endverbraucher angeschlossen ist, wird von einem Verteilnetz- und Messstellenbetreiber betrieben und erhält den Strom von einem Stromlieferant. Der Endverbraucher initiiert als Nutzer des Elektrofahrzeugs einen Ladevorgang zum Zeitpunkt t_{A} indem er sein Elektrofahrzeug über ein Ladekabel an einen Ladepunkt, beispielsweise eine Wall-Box, anschließt und daraufhin eine Ladeanfrage übermittelt wird. Diese Ladeanfrage wird mit der Übertragungstechnik des Ladepunkts (ÜT1) an die Übertragungstechnik der Zentrallogik (ÜT2) übermittelt. Die Übermittlung erfolgt mittels einer bidirektionalen Datenverbindung basierend auf der Funktechnik LoRaWAN (englisch: long range wide area network). Gemäß dem dargestellten Ausführungsbeispiel umfasst die Ladeanfrage des Ladepunkts zumindest den Leistungsbedarf über die Ladeperiode, welche vom Ladepunkt ermittelt wurde, um das Fahrzeug optimal zu laden. Die Zentrallogik ermittelt nach Zuordnung des Ladepunkts zu einem virtuellen Leistungsknoten die Niederspannungsnetzauslastungserwartung für die Ladeperiode T_{LP}, welche zum Startzeitpunkt des Ladevorgangs t_{LP} beginnt.

Der **Fig. 3** ist zu entnehmen, dass die Ladeanfrage zeitlich vor den Beginn der Ladeperiode gestellt wird. In Abhängigkeit von der Niederspannungsnetzauslastungserwartung und der maximalen Netzauslastung während der Ladeperiode T_{LP} ermittelt die Zentrallogik eine Niederspannungsnetzreserve im virtuellen Leistungsknoten, dem der Ladepunkt zugeordnet wurde. Im dargestellten Ausführungsbeispiel gemäß Fig. 2 kann die Zentrallogik auf Daten der Schutz- und Leittechnik des Verteilnetzbetreibers (VNB SLT) zugreifen und diese zur Ermittlung von Niederspannungsnetzauslastungserwartung und maximaler Netzauslastung verwenden. In Abhängigkeit des Vergleichs der Niederspannungsnetzreserve am virtuellen Leistungsknoten mit dem angefragten Leistungsbedarf während der Ladeperiode erstellt die Zentrallogik eine Ladeanweisung, welche an den Ladepunkt mittels der Übertragungstechnik auf Funkbasis übermittelt wird. Im dargestellte Ausführungsbeispiel umfasst die Ladeanweisung eine Modifikation der Ladeanfrage, da die Zentrallogik gemäß der übermittelten Ladeanweisung eine maximale Ladeleistung, abweichend von der angefragten Ladeleistung, für die angefragte Ladeperiode vorgibt. Zudem ist es möglich, je nach Vorgaben des Endverbrauchers, das Laden des Elektrofahrzeugs in Abhängigkeit des Nutzerprofils, der Stromtarifvorgaben und/oder unter Optimierung von Kosten und/oder Zeit vorzunehmen. Bei Übermittlung entsprechender Vorgaben an die Zentrallogik können diese bei der Erstellung der Ladeanweisung berücksichtigt werden. Entspricht die Niederspannungsnetzreserve dem angefragten Leistungsbedarf P_{LP}, wie es in **Fig. 3** der Fall ist, umfasst die Ladeanweisung eine Freigabe der Ladeanfrage ohne Modifikation. Nach Erstellung einer Ladeanweisung und Freigabe eines Leistungsbedarfs für eine Ladeperiode wird einerseits der Ladevorgang am Ladepunkt gemäß Ladeanweisung aktiviert und andererseits der Leistungsbedarf während der Ladeperiode am virtuellen Leistungsknoten gemäß Ladeanweisung durch die Zentrallogik reserviert und die freigegebene Leistung fiktiv in der Berechnung einer neuen Netzauslastungserwartung berücksichtigt. Stellt ein, hier nicht dargestellter, weiterer Ladepunkt, welcher dem gleichen virtuellen Leistungsknoten zugeordnet wird, eine Ladeanfrage, wird wiederum die Niederspannungsnetzreserve nach Übermittlung der Ladeanfrage mit dem angefragten Leistungsbedarf während der angefragten Ladeperiode durch die Zentrallogik verglichen und eine Ladeanweisung erstellt. Übersteigt der angefragte Leistungsbedarf die Niederspannungsnetzreserve, umfasst die Ladeanweisung entweder eine Modifikation, so dass eine maximale Netzauslastung nicht überschritten wird oder eine komplette Zurückweisung der Ladeanfrage. Bei Zurückweisung kann durch den Ladepunkt zu einem späteren Zeitpunkt eine erneute Ladeanfrage gestellt werden.

## Patentansprüche

1. Verfahren zur Steuerung von Ladepunkten für Elektrofahrzeuge in einem Niederspannungsnetz, wobei an das Niederspannungsnetz Endabnehmer und Ladepunkte angeschlossen sind, und wobei die Endabnehmer und Ladepunkte mit einem Hausübergabepunkt und/oder einer Messstelle verbunden sind, und wobei die Ladepunkte einem virtuellen Leistungsknoten zugeordnet werden, umfassend die folgenden Schritte:
a) Verbinden eines Ladepunkts mit einem Elektrofahrzeug; und
b) Zuordnen des Ladepunkts zu einem virtuellen Leistungsknoten; und
c) Ermitteln eines Leistungsbedarfs P_{LP} des Ladepunkts und einer Ladeperiode T_{LP} zum Laden der Batterie des mit dem Ladepunkt verbundenen Elektrofahrzeugs; und
d) Übermitteln einer Ladeanfrage für einen Ladevorgang zum Anfragezeitpunkt t_{A} durch den mit dem Elektrofahrzeug verbundenen Ladepunkt an eine Zentrallogik; und
e) Ermitteln einer Niederspannungsnetzauslastungserwartung durch die Zentrallogik für die Ladeperiode T_{LP}, wobei die Ladeperiode T_{LP} zu einem Startzeitpunkt des Ladevorgangs t_{LP} beginnt, welcher dem Anfragezeitpunkt t_{A} zeitlich nachfolgend ist; und
f) Ermitteln einer Niederspannungsnetzreserve am virtuellen Leistungsknoten in Abhängigkeit von der Niederspannungsnetzauslastungserwartung und der maximalen Netzauslastung während der Ladeperiode T_{LP}; und
g) Vergleich der Niederspannungsnetzreserve am virtuellen Leistungsknoten mit dem Leistungsbedarf P_{LP} während der Ladeperiode T_{LP} durch die Zentrallogik; und
h) Erstellen einer Ladeanweisung durch die Zentrallogik
i) Übermitteln einer Ladeanweisung an den Ladepunkt und Reservierung des Leistungsbedarfs P_{LP} während der Ladeperiode T_{LP} am virtuellen Leistungsknoten gemäß Ladeanweisung durch die Zentrallogik; und
j) Aktivierung des Ladevorgangs gemäß Ladeanweisung durch den Ladepunkt zum Startzeitpunkt t_{LP}.

2. Verfahren nach Anspruch 1,
wobei die Ladeanweisung eine Freigabe der Ladeanfrage oder eine Zurückweisung der Ladeanfrage oder eine Modifikation der Ladeanfrage umfassen kann.

3. Verfahren nach Anspruch 2,
wobei die Modifikation der Ladeanfrage durch die Zentrallogik ein Reduzieren des angefragten Leistungsbedarfs P_{LP} des Ladepunkts und/oder ein Reduzieren der Ladeperiode T_{LP} und/oder eine Verschiebung des Startzeitpunkts des Ladevorgangs t_{LP} umfassen kann.

4. Verfahren nach einem der Ansprüche 1 bis 3,
wobei die Ladeanweisung durch die Zentrallogik in Abhängigkeit von der Niederspannungsnetzreserve am virtuellen Leistungsknoten und/oder in Abhängigkeit von der Anzahl der vor dem Anfragezeitpunkt t_{A} übermittelten Ladeanfragen des mit dem Ladepunkt verbundenen Elektrofahrzeugs und/oder in Abhängigkeit vom Ladezustand der Batterie des verbundenen Elektrofahrzeugs und/oder in Abhängigkeit von den Energiekosten in der Ladeperiode T_{LP} und/oder bei einer Vielzahl von einem virtuellen Leistungsknoten zugeordneten Ladepunkten in Abhängigkeit von den Ladeanfragen der weiteren Ladepunkte erstellt wird.

5. Verfahren nach einem der Ansprüche 1 bis 4,
wobei die Energiezufuhr zu einem Ladepunkt unterbrochen werden kann, sobald die tatsächliche Niederspannungsnetzauslastung einen Grenzwert überschreitet.

6. Verfahren nach einem der Ansprüche 1 bis 5,
wobei in Schritt c) das Ermitteln des Leistungsbedarfs P_{LP} des Ladepunkts und/oder der Ladeperiode T_{LP} zum Laden der Batterie des mit dem Ladepunkt verbundenen Elektrofahrzeugs anhand der Vorgabe eines Leistungsbedarfs P_{LP} und/oder einer Ladeperiode T_{LP} durch einen Nutzer des Elektrofahrzeugs erfolgen kann.

7. Verfahren nach einem der Ansprüche 1 bis 6,
wobei in Schritt c) der Leistungsbedarf P_{LP} des Ladepunkts zum Laden des mit dem Ladepunkt verbundenen Elektrofahrzeugs in Abhängigkeit von der Zeit ermittelt wird.

8. Verfahren nach einem der Ansprüche 1 bis 7,
wobei das Übermitteln der Ladeanfrage durch den Ladepunkt an die Zentrallogik drahtlos und/oder kabelgebunden erfolgen kann.

9. Verfahren nach einem der Ansprüche 1 bis 8,
wobei das Verbinden des Ladepunkts mit dem Elektrofahrzeug drahtlos und/oder kabelgebunden erfolgen kann.

10. Verfahren nach einem der Ansprüche 1 bis 9,
wobei eine Ladevoranfrage durch das Elektrofahrzeug an den Ladepunkt zu einem Zeitpunkt t_{AE}, welchem der Anfragezeitpunkt t_{A} nachfolgt, übermittelt werden kann und die Ladevoranfrage des Elektrofahrzeugs im Ladepunkt verarbeitet wird.

11. Verfahren nach einem der Ansprüche 1 bis 10,
wobei das Zuordnen eines Ladepunkts zu einem virtuellen Leistungsknoten anonymisiert erfolgt.

12. Verfahren nach einem der Ansprüche 1 bis 11,
wobei die Niederspannungsnetzauslastungserwartung durch die Zentrallogik für die Ladeperiode T_{LP} in Abhängigkeit von der momentanen Netzauslastung zum Zeitpunkt t_{A} und/oder von den in der Zentrallogik hinterlegten Daten ermittelt wird.

13. Verfahren nach einem der Ansprüche 1 bis 12,
wobei der tatsächliche Verbrauch an elektrischer Energie durch die Messstelle erfasst wird und/oder eine Leistungsaggregation zur Leistungsplanung des Niederspannungsnetzes am Hausübergabepunkt erfolgt.

14. Verfahren nach einem der Ansprüche 1 bis 13,
wobei der Leistungsbedarf P_{LP} des Elektrofahrzeugs in der Ladeperiode T_{LP} anhand der maximalen Leistung des Ladepunkts, der maximalen Leistung des Ladeanschlusses, der maximalen Leistung des Elektrofahrzeugs, der Temperatur der Batterie, des Ladezustands der Batterie und/oder der Temperatur am Ort des Ladepunkts ermittelt wird.

15. Verfahren nach einem der Ansprüche 1 bis 14,
wobei ein Ladepunkt mit einer Ladeleistung von weniger als 22 Kilowatt oder weniger als 12 Kilowatt betrieben wird.

## Geänderte Patentansprüche

### Geänderte Patentansprüche gemäss Regel 137(2) EPÜ.

1. Verfahren zur Steuerung von Ladepunkten für Elektrofahrzeuge in einem Niederspannungsnetz, wobei an das Niederspannungsnetz Endabnehmer und Ladepunkte angeschlossen sind, und wobei die Endabnehmer und Ladepunkte mit einem Hausübergabepunkt und/oder einer Messstelle verbunden sind, und wobei eine Zentrallogik das Niederspannungsnetz anhand der Ladepunkte und der Messstellen und/oder der Hausübergabepunkte virtuell modelliert, und wobei das virtuell modellierte Niederspannungsnetz virtuelle Leistungsknoten aufweist, und wobei in dem virtuell modellierten Niederspannungsnetz zumindest ein Ladepunkt einem virtuellen Leistungsknoten zugeordnet wird, und wobei durch die Zentrallogik jeder Ladepunkt genau einem virtuellen Leistungsknoten zugeordnet wird, und wobei die Zentrallogik die Leistungsbedarfe der einem gemeinsamen Leistungsknoten zugeordneten Ladepunkte in diesem Leistungsknoten aggregieren kann, umfassend die folgenden Schritte:
a) Verbinden eines Ladepunkts mit einem Elektrofahrzeug; und
b) Zuordnen des Ladepunkts zu einem virtuellen Leistungsknoten; und
c) Ermitteln eines Leistungsbedarfs P_{LP} des Ladepunkts und einer Ladeperiode T_{LP} zum Laden der Batterie des mit dem Ladepunkt verbundenen Elektrofahrzeugs; und
d) Übermitteln einer Ladeanfrage für einen Ladevorgang zum Anfragezeitpunkt t_{A} durch den mit dem Elektrofahrzeug verbundenen Ladepunkt an eine Zentrallogik; und
e) Ermitteln einer Niederspannungsnetzauslastungserwartung durch die Zentrallogik für die Ladeperiode T_{LP}, wobei die Ladeperiode T_{LP} zu einem Startzeitpunkt des Ladevorgangs t_{LP} beginnt, welcher dem Anfragezeitpunkt t_{A} zeitlich nachfolgend ist; und
f) Ermitteln einer Niederspannungsnetzreserve am virtuellen Leistungsknoten in Abhängigkeit von der Niederspannungsnetzauslastungserwartung und der maximalen Netzauslastung während der Ladeperiode T_{LP}; und
g) Vergleich der Niederspannungsnetzreserve am virtuellen Leistungsknoten mit dem Leistungsbedarf P_{LP} während der Ladeperiode T_{LP} durch die Zentrallogik; und
h) Erstellen einer Ladeanweisung durch die Zentrallogik;
i) Übermitteln einer Ladeanweisung an den Ladepunkt und Reservierung des Leistungsbedarfs P_{LP} während der Ladeperiode T_{LP} am virtuellen Leistungsknoten gemäß Ladeanweisung durch die Zentrallogik; und
j) Aktivierung des Ladevorgangs gemäß Ladeanweisung durch den Ladepunkt zum Startzeitpunkt t_{LP}.

2. Verfahren nach Anspruch 1,
wobei die Ladeanweisung eine Freigabe der Ladeanfrage oder eine Zurückweisung der Ladeanfrage oder eine Modifikation der Ladeanfrage umfassen kann.

3. Verfahren nach Anspruch 2,
wobei die Modifikation der Ladeanfrage durch die Zentrallogik ein Reduzieren des angefragten Leistungsbedarfs P_{LP} des Ladepunkts und/oder ein Reduzieren der Ladeperiode T_{LP} und/oder eine Verschiebung des Startzeitpunkts des Ladevorgangs t_{LP} umfassen kann.

4. Verfahren nach einem der Ansprüche 1 bis 3,
wobei die Ladeanweisung durch die Zentrallogik in Abhängigkeit von der Niederspannungsnetzreserve am virtuellen Leistungsknoten und/oder in Abhängigkeit von der Anzahl der vor dem Anfragezeitpunkt t_{A} übermittelten Ladeanfragen des mit dem Ladepunkt verbundenen Elektrofahrzeugs und/oder in Abhängigkeit vom Ladezustand der Batterie des verbundenen Elektrofahrzeugs und/oder in Abhängigkeit von den Energiekosten in der Ladeperiode T_{LP} und/oder bei einer Vielzahl von einem virtuellen Leistungsknoten zugeordneten Ladepunkten in Abhängigkeit von den Ladeanfragen der weiteren Ladepunkte erstellt wird.

5. Verfahren nach einem der Ansprüche 1 bis 4,
wobei die Energiezufuhr zu einem Ladepunkt unterbrochen werden kann, sobald die tatsächliche Niederspannungsnetzauslastung einen Grenzwert überschreitet.

6. Verfahren nach einem der Ansprüche 1 bis 5,
wobei in Schritt c) das Ermitteln des Leistungsbedarfs P_{LP} des Ladepunkts und/oder der Ladeperiode T_{LP} zum Laden der Batterie des mit dem Ladepunkt verbundenen Elektrofahrzeugs anhand der Vorgabe eines Leistungsbedarfs P_{LP} und/oder einer Ladeperiode T_{LP} durch einen Nutzer des Elektrofahrzeugs erfolgen kann.

7. Verfahren nach einem der Ansprüche 1 bis 6,
wobei in Schritt c) der Leistungsbedarf P_{LP} des Ladepunkts zum Laden des mit dem Ladepunkt verbundenen Elektrofahrzeugs in Abhängigkeit von der Zeit ermittelt wird.

8. Verfahren nach einem der Ansprüche 1 bis 7,
wobei das Übermitteln der Ladeanfrage durch den Ladepunkt an die Zentrallogik drahtlos und/oder kabelgebunden erfolgen kann.

9. Verfahren nach einem der Ansprüche 1 bis 8,
wobei das Verbinden des Ladepunkts mit dem Elektrofahrzeug drahtlos und/oder kabelgebunden erfolgen kann.

10. Verfahren nach einem der Ansprüche 1 bis 9,
wobei eine Ladevoranfrage durch das Elektrofahrzeug an den Ladepunkt zu einem Zeitpunkt t_{AE}, welchem der Anfragezeitpunkt t_{A} nachfolgt, übermittelt werden kann und die Ladevoranfrage des Elektrofahrzeugs im Ladepunkt verarbeitet wird.

11. Verfahren nach einem der Ansprüche 1 bis 10,
wobei das Zuordnen eines Ladepunkts zu einem virtuellen Leistungsknoten anonymisiert erfolgt, indem am virtuellen Leistungsknoten ausschließlich Leistungsbedarfe mehrerer Ladepunkte entkoppelt von der Zuordnung zu einer Messstelle oder einem Hausübergabepunkt erfasst und aggregiert werden.

12. Verfahren nach einem der Ansprüche 1 bis 11,
wobei die Niederspannungsnetzauslastungserwartung durch die Zentrallogik für die Ladeperiode T_{LP} in Abhängigkeit von der momentanen Netzauslastung zum Zeitpunkt t_{A} und/oder von den in der Zentrallogik hinterlegten Daten ermittelt wird.

13. Verfahren nach einem der Ansprüche 1 bis 12,
wobei der tatsächliche Verbrauch an elektrischer Energie durch die Messstelle erfasst wird und/oder eine Leistungsaggregation zur Leistungsplanung des Niederspannungsnetzes am Hausübergabepunkt erfolgt.

14. Verfahren nach einem der Ansprüche 1 bis 13,
wobei der Leistungsbedarf P_{LP} des Elektrofahrzeugs in der Ladeperiode T_{LP} anhand der maximalen Leistung des Ladepunkts und/oder der maximalen Leistung des Ladeanschlusses und/oder der maximalen Leistung des Elektrofahrzeugs und/oder der Temperatur der Batterie und/oder des Ladezustands der Batterie und/oder der Temperatur am Ort des Ladepunkts ermittelt wird.

15. Verfahren nach einem der Ansprüche 1 bis 14,
wobei ein Ladepunkt mit einer Ladeleistung von weniger als 22 Kilowatt oder weniger als 12 Kilowatt betrieben wird.
